# EUROPÄISCHE PATENTANMELDUNG

(11) **EP 1 003 039 A1**
(43) Veröffentlichungstag der Anmeldung: **24.05.2000**
(21) Anmeldenummer: 99811039.9
(22) Anmeldetag: 11.11.1999
(51) Int. Cl.: G01N 35/00, B25J 15/00, G01G 15/00

(54) **Vorrichtung zum Aufnehmen von Gegenständen sowie Uebergabeeinrichtung und Arbeitssation**

(30) Priorität: 17.11.1998 CH 229798
(71) Anmelder: Tecan AG, 8634 Hombrechtikon (CH)
(72) Erfinder: Schinzel, Fred, 8708 Männedorf (CH)
(74) Vertreter: Wagner, Wolfgang, Dr. Phil., Dipl.-Phys.

(57) **Zusammenfassung**

Eine Arbeitsstation weist eine Uebergabeeinrichtung auf mit einem Greifer, welcher geeignet ist, mittels einer Greiferzange Proberöhren zu fassen und, z. B. zwecks Zentrifugierung von einem Proberöhrenbehälter zu einem Proberöhrenkorb, zu verschieben. Sie umfasst eine Aufnahmevorrichtung (23), welche an einem zylindrischen oberen Handhabungsteil (25) vom Greifer gefasst und einer Halterung (24), in der sie in definierter Lage abgelegt ist, entnommen werden kann. Sie weist ein Zwischenteil (33) auf mit vier in den Ecken eines Rechtecks angeordneten Haken (37) an seinem unteren Ende, die in Oesen an den Proberöhrenkörben eingreifen können. Nach Gebrauch wird die Aufnahmevorrichtung (23) wieder in der Halterung (24) abgelegt.

## Beschreibung

### Technisches Gebiet

Die Erfindung betrifft eine Aufnahmevorrichtung zur Aufnahme von Gegenständen mittels eines Greifers, eine jeweils eine solche Aufnahmevorrichtung umfassende Aufnahmeeinrichtung und Uebergabeeinrichtung sowie eine Arbeitsstation und ein Verfahren zu ihrem Betrieb. Einrichtungen und Verfahren dieser Art werden in chemischen, biologischen und medizinischen Labors zur Behandlung von Proben, insbesondere zur Vorbereitung der Zentrifugierung derselben eingesetzt.

### Stand der Technik

Aus WO-A-98/01 760 ist ein Greifer bekannt mit einer Greifzange, welche zum Fassen von Proberöhren geeignet ist. Mittels des Greifers können daher einzelne Proberöhren von einem Proberöhrenbehälter in einen Proebröhrenkorb verschoben werden, welcher dann in eine Zentrifuge eingeführt wird. Damit dies ebenfalls mittels des Greifers geschehen kann, müssen die Proberöhrenkörbe mit einem zylindrischen Griff versehen, also besonders ausgebildet sein.

Aus der WO-A-90/08 326 ist eine Arbeitsstation bekannt mit einem Greifer, welcher geeignet ist, ganze zum Einsatz in Zentrifugen geeignete Rotoren, welche mittels einer separaten Bearbeitungseinheit ausserhalb der Zentrifuge beladen und entladen werden, zu fassen und in dieselben einzusetzen und aus ihnen zu entfernen. Der Gebrauch von Proberöhrenkörben ist nicht vorgesehen. Der Aufbau der Arbeitsstation ist verhältnismässig kompliziert.

### Darstellung der Erfindung

Der Erfindung liegt die Aufgabe zugrunde, eine Aufnahmevorrichtung anzugeben, welche es ermöglicht, mittels eines Greifers, der zum direkten Fassen von Proberöhren geeignet ist, auch andere Gegenstände, insbesondere Proberöhrenkörbe, aufzunehmen und zu verschieben, ohne dass dieselben besonders an den Greifer angepasst sein müssten. Weiters soll eine Aufnahmeeinrichtung angegeben werden, welche ausserdem eine Haltevorrichtung umfasst, in welcher die Aufnahmevorrichtung so abgelegt werden kann, dass sie vom Greifer leicht und sicher angefahren und gefasst werden kann.

Zudem soll eine Uebergabeeinrichtung zum Aufnehmen, Verschieben und Absetzen einzelner Proberöhren angegeben werden, welche mittels eines einzigen Greifers sowohl einzelne Proberöhren als auch andere Gegenstände, insbesondere übliche Proberöhrenkörbe aufnehmen und verschieben kann. Schliesslich soll eine Arbeitsstation angegeben werden, bei welcher insbesondere das Zuführen, Verteilen und Zentrifugieren von Proberöhren wesentlich erleichtert ist sowie ein diesbezüglich geeignetes Verfahren zu ihrem Betrieb.

Diese Aufgaben werden durch die Erfindung, wie sie in den Ansprüchen gekennzeichnet ist, gelöst. Durch die erfindungsgemässe Aufnahmevorrichtung oder -einrichtung wird ein zum Fassen und Verschieben von Proberöhren geeigneter Greifer zu einer erfindungsgemässen Uebergabeeinrichtung ergänzt, die u. a. auch ein rasches Beladen einer Zentrifuge mit verhältnismässig kostengünstigen Mitteln ermöglicht, da sie auch Proberöhrenkörbe handhaben kann. Nach dem Verteilen der Proberöhren auf die Proberöhrenkörbe können daher die letzteren mittels der gleichen Uebergabeeinrichtung auch in die Zentrifuge eingeführt werden, was bedeutende Einsparungen ermöglicht.

Die erfindungsgemässe Arbeitsstation verbindet die Merkmale mehrerer erfindungsgemässer Komponenten zu einer für eine rasche Durchführung des Zentrifugierschrittes insbesondere gemäss dem erfindungsgemässen Verfahren besonders geeigneten Konfiguration und ist ausserdem verhältnismässig kostengünstig. Sie kann auch zur Durchführung weiterer Verarbeitungsschritte geeignet ausgestaltet sein.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine schematische Uebersicht über eine erfindungsgemässe Arbeitsstation und den Ablauf des erfindungsgemässen Verfahrens,
- Fig. 2: eine perspektivische Darstellung der erfindungsgemässen Aufnahmeeinrichtung,
- Fig. 3: eine Draufsicht auf einen Teil der in Fig. 2 dargestellten erfindungsgemässen Aufnahmeeinrichtung,
- Fig. 4: eine perspektivische Darstellung von Teilen der erfindungsgemässen Uebergabeeinrichtung und
- Fig. 5: einen vertikalen Längsschnitt durch die in Fig. 4 dargestellten Teile der erfindungsgemässen Uebergabeeinrichtung.

### Wege zur Ausführung der Erfindung

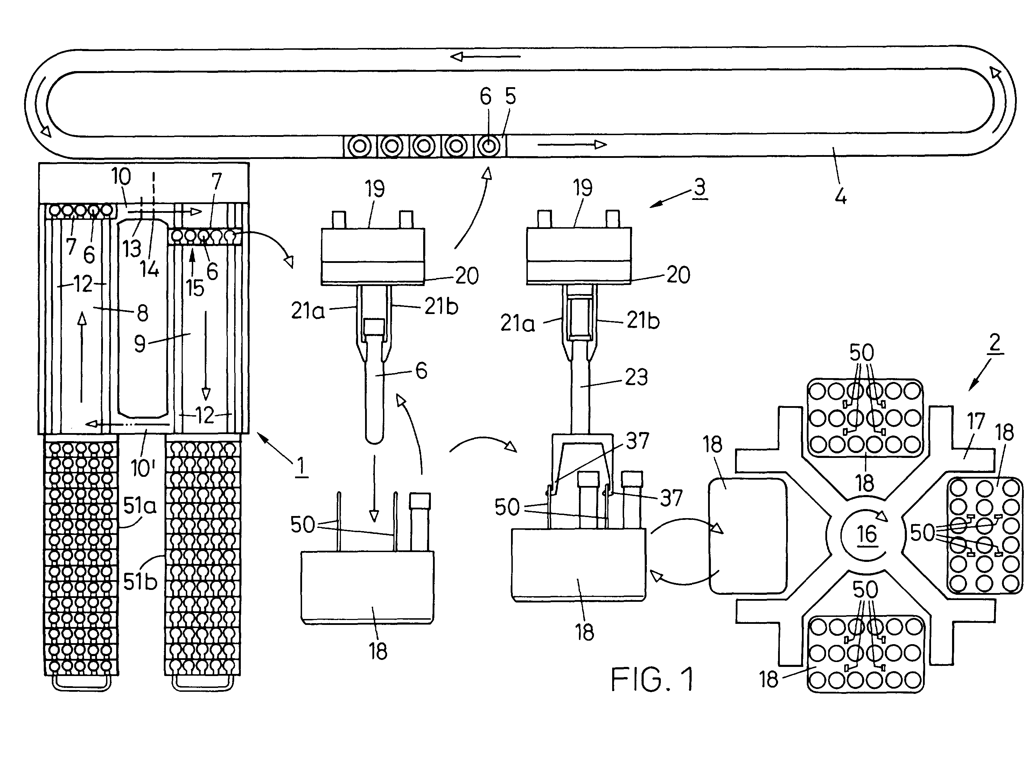

Fig. 1 zeigt eine Arbeitsstation mit einer Zuführeinrichtung 1, einer Zentrifuge 2 und einer Uebergabeeinrichtung 3. Ausserdem ist eine Fördereinrichtung 4 vorhanden, die einzelne in Träger 5 eingesteckte Proberöhren 6 zu anderen Bearbeitungsmodulen (nicht dargestellt) bringt.

Die Zuführeinrichtung 1 dient zur Zuführung von Proberöhren 6, die, gewöhnlich zu mehreren, u. U. aber auch einzeln, in Proberöhrenbehältern 7 angeliefert werden, zur Arbeitsstation und zugleich zur Ueberprüfung und Klassifizierung derselben. Sie umfasst eine Zuführbahn 8 und eine mit Abstand neben derselben angeordnete, zu ihr parallele Rückführbahn 9, die beide mit Förderbändern 12 ausgestattet sind. Das Ende der Zuführbahn 8 ist mit dem Anfang der Rückführbahn 9 durch eine querverlaufende Zwischenbahn 10 verbunden. Auf der gegenüberliegenden Seite sind an der Zwischenbahn 10 ein Höhenabtaster 13 mit zwei auf unterschiedlichen Höhen angeordneten optisch-reflexiv arbeitenden Zellen und und ein Balkencodeleser 14 nebeneinander angeordnet. Es kann ausserdem eine zweite querverlaufende Zwischenbahn 10' vorgesehen sein, die das Ende der Rückführbahn 9 mit dem Anfang der Zuführbahn 8 verbindet. Am Anfang der Rückführbahn 9 ist eine Waage 15 eingebaut, mittels welcher das Gewicht des jeweils auf ihr befindlichen Proberöhrenbehälters 7 ermittelt werden kann.

Die Zentrifuge 2 weist ein um eine mittige Drehachse 16 drehbares Kreuz 17 auf, zwischen dessen Armen vier Proberöhrenkörbe 18 aufgehängt werden können, die ganz oder teilweise mit Proberöhren aufgefüllt sind. Die Proberöhren sind in Ausnehmungen, die in mehreren parallelen Reihen im jeweiligen Proberöhrenkorb angeordnet sind, eingesteckt. Die Proberöhrenkörbe 18 bilden zwei Paare, wobei die zu einem Paar gehörigen einander jeweils bezüglich der Drehachse 16 diametral gegenüberliegen. Die Gewichte der Proberöhrenkörbe 18 eines Paares dürfen zur Begrenzung der Unwucht höchstens um einen bestimmten Maximalwert, der gewöhnlich zwischen 15g und 20g liegt, voneinander abweichen.

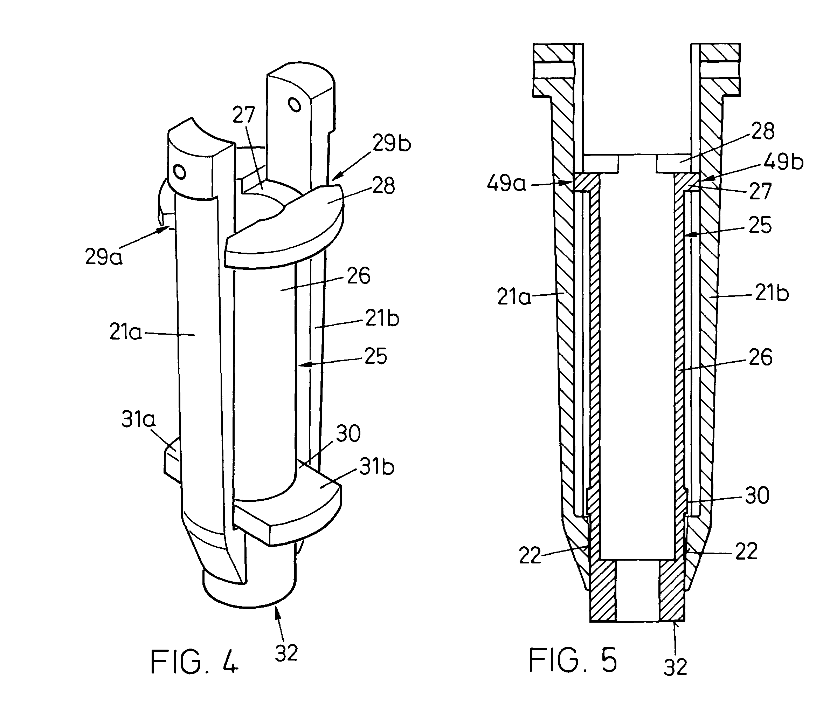

Die Uebergabeeinrichtung 3 umfasst einen Greifer 19 (in Fig. 1 in zwei verschiedenen Positionen dargestellt), welcher so aufgehängt ist, dass er in drei Richtungen, insbesondere in zwei zueinander normalen waagrechten Richtungen und senkrecht gesteuert verfahren werden kann. Er weist eine nach unten ragende Greiferzange 20 auf, welche um eine senkrechte Achse gesteuert drehbar ist und zwei einander gegenüberliegende Greiferfinger 21a,b umfasst, die zum Oeffnen und Schliessen der Greiferzange 20 voneinander weg bzw. aufeinander zu bewegt werden können. Die Greiferfinger 21a,b weisen an ihren Endbereichen einander zugekehrte gekehlte Kontaktflächen 22 (Fig. 5) auf, die zur Verbesserung der Haftung mit einem rutschfesten, elastischen Belag z. B. aus Polyurethan überzogen sind. Die Greiferzange 20 eignet sich damit unmittelbar zum Erfassen und Halten von Proberöhren 6 und Gegenständen ähnlicher Form.

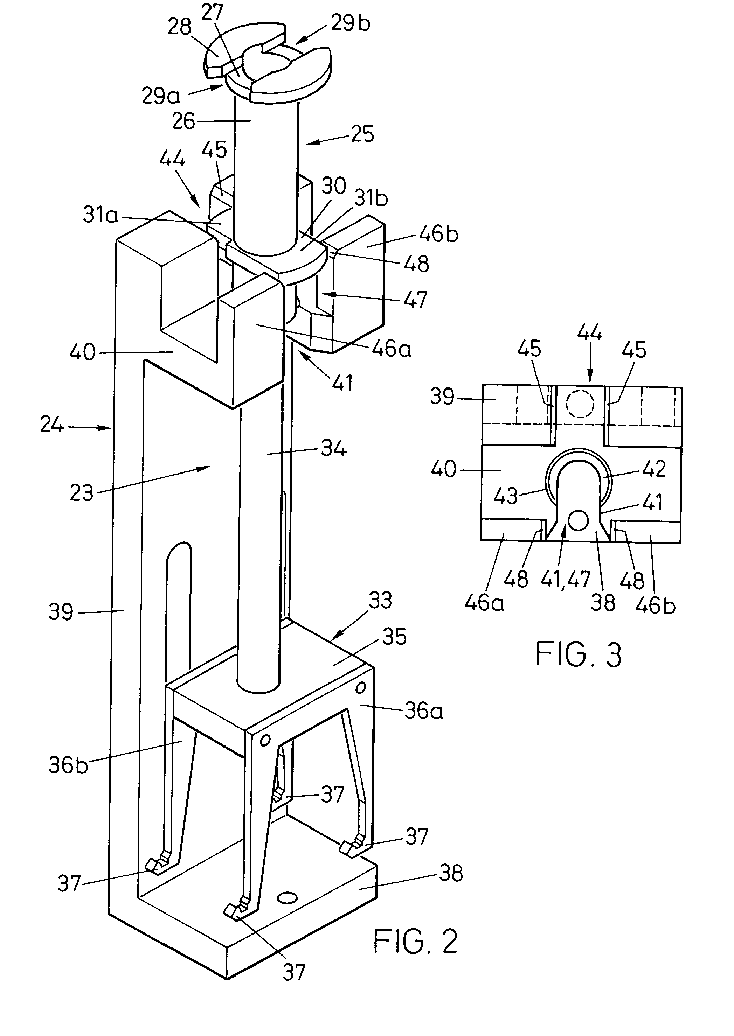

Damit auch andere Gegenstände wie z. B. Proberöhrenkörbe 18 vom Greifer 19 erfasst werden können, ist im Zugriffsbereich desselben eine Aufnahmeeinrichtung angeordnet (Fig. 2), die eine Aufnahmevorrichtung 23 umfasst sowie eine Halterung 24, in der dieselbe abgelegt ist. Die Aufnahmevorrichtung 23 weist ein oberes Handhabungsteil 25 auf, welches einen zylindrischen, also bezüglich seiner Form im wesentlichen einer Proberöhre entsprechenden Grundkörper 26 umfasst, der an seinem oberen Ende einen umlaufenden ersten Kragen 27 trägt. Unmittelbar darüber ist ein grösserer zweiter Kragen 28 angebracht, welcher zwei einander gegenüberliegende Ausnehmungen 29a,b aufweist. In der Nähe seines unteren Endes trägt der Grundkörper 26 einen länglichen dritten Kragen 30, der zwei einander gegenüberliegende längere Fortsätze 31a,b bildet, aber unterhalb der Ausnehmungen 29a,b nur schmal ist. Das untere Ende des Grundkörpers 26 bildet eine nach unten weisende kreisringförmige Anschlagfläche 32 (Fig. 4, 5).

An den Grundkörper 26 des Handhabungsteils 25 schliesst (Fig. 2) unten ein mit ihm verbundenes, z. B. verschraubtes Zwischenteil 33 an mit einem zylindrischen Stiel 34 und einer an dessen unterem Ende befestigten Trägerplatte 35, an deren Längsseiten zwei U-Teile 36a,b angeschraubt sind, deren jedes zwei nach unten ragende Haken 37 bildet, derart, dass die Positionen der vier gleichgerichteten Haken 37 die Eckpunkte eines waagrechten Rechtecks bilden.

Die Halterung 24 weist eine Bodenplatte 38 auf, an welcher eine senkrechte Rückwand 39 befestigt ist, die etwas unterhalb ihres oberen Endes eine oberhalb der Bodenplatte 38 liegende waagrechte Halteplatte 40 trägt. Diese weist an ihrem von der Rückwand 39 abgewandten Rand einen Schlitz 41 auf, welcher halbkreisförmig abschliesst und an der Oberseite der Halteplatte 40 von einem Auflagestreifen 42 (Fig. 3) umgeben ist, der einen Teilkreisring bildet. Er ist gegenüber dem umgebenden Teil der Oberseite der Halteplatte 40 tiefergelegt und mit ihm über einen trichterförmig nach innen geneigten Zentrierstreifen 43 verbunden. Die Rückwand 39 ist mit einem oben offenen senkrechten Schlitz 44 versehen, der bis zur Halteplatte 40 durchgeht und an seinen oberen Rändern nach innen abfallende Abschrägungen 45 aufweist. Am vorderen Rand trägt die Halteplatte 40 zwei nach oben weisende, bündig mit der Rückwand 39 abschliessende Frontplatten 46a,b, die einen etwas breiteren oben offenen senkrechten Schlitz 47 seitlich begrenzen, der gleichfalls an seinen oberen Rändern nach innen abfallende Abschrägungen 48 aufweist.

Bei in der Halterung 24 abgelegter Aufnahmevorrichtung 23 nimmt der Schlitz 41 den Stiel 34 des Zwischenteils 33 auf, während die Anschlagfläche 32 am unteren Ende des Handhabungsteils 25, vom Zentrierstreifen 43 knapp umgeben, auf dem Auflagestreifen 42 aufliegt. Die Fortsätze 31a,b ragen dabei mit knappem seitlichen Spiel in die Schlitze 44 bzw. 47. Die räumliche Lage der Aufnahmevorrichtung 23 ist somit einschliesslich ihrer Drehlage genau definiert.

Wird das Handhabungsteil 25 von der Greiferzange 20 gehalten, so liegen (Fig. 4, 5) die gekehlten Kontaktflächen 22 der Greiferfinger 21a,b etwas unterhalb des dritten Kragens 30 an Abschnitten der Aussenseite des zylindrischen Grundkörpers 26 an, die etwa entsprechend gebauchte Gegenkontaktflächen bilden. Die Kontaktflächen 22 sind etwas nach innen versetzt. Die Einsprünge liegen knapp unterhalb des Kragens 30 und bilden eine Sicherung gegen Herausgleiten des Handhabungsteils 25 nach unten. Die Greiferfinger 21a,b liegen in den Ausnehmungen 29a,b im zweiten Kragen 28 und bilden mit denselben eine Sicherung gegen Verdrehung des Handhabungsteils 25 um eine senkrechte Achse wie auch gegen Querverschiebung. Zugleich liegen die Greiferfinger 21a,b mit Kontaktbereichen 49a,b am Aussenrand des ersten Kragens 27 an. Dabei sind die unterhalb der Kontaktstelle liegenden Abschnitte der Greiferfinger 21a,b leicht elastisch nach aussen gebogen, so dass die Kontaktflächen 22 mit einem gewissen Anpressdruck an den Gegenkontaktflächen anliegen und den Grundkörper 26 dort unverrückbar fixieren. Durch die Kontaktierung des Handhabungsteils 25 an zwei vertikal beabstandeten Bereichen ist dasselbe auch gegen Drehungen um horizontale Achsen zuverlässig gesichert. Die Aufnahmevorrichtung 23 kann also vom Greifer 19 stets in definierter Lage gehalten und sicher geführt werden.

Damit (Fig. 1) die Proberöhrenkörbe 18 an die Aufnahmevorrichtung 23 angekoppelt werden können, sind sie mit vier nach oben weisenden Laschen 50 versehen, welche an ihren oberen Enden Oesen bilden, deren relative Lage derjenigen der Haken 37 entspricht. Die Haken 37 können also zum Ankoppeln des Proberöhrenkorbes 18 zugleich in die vier Oesen eingeführt werden, worauf der Proberöhrenkorb 18 angehoben und verschoben werden kann. Nach Absetzen desselben am gewünschten Platz können die Haken 37 aus den Oesen wieder herausgezogen werden.

Soll nun eine Anzahl von Proben in der Anlage nach Fig. 1 bearbeitet, insbesondere mindestens ein Teil von ihnen zentrifugiert werden, so wird eine Lade mit Proberöhrenbehältern 7, welche jeweils ganz oder teilweise mit Proberöhren 6 gefüllt sind, angeliefert und als Lade 51a an den Eingang der Zuführbahn 8 angekoppelt. Die Proberöhren 6 enthalten jeweils zu behandelnde Proben und sind mit Balkencode-Etiketten versehen, welche dieselben kennzeichnen. Dann werden die Proberöhrenbehälter 7 manuell auf die Zuführbahn 8 geschoben, dort von den Förderbändern 12 erfasst und quer zu ihrer Längsrichtung weitertransportiert, bis die Zuführbahn 8 aufgefüllt ist.

Dann wird ein Proberöhrenbehälter 7 nach dem anderen quer zur bisherigen Transportrichtung in Längsrichtung über die Zwischenbahn 10 geschoben, wobei die Proberöhren 6 eine nach der anderen vom Höhenabtaster 13 jeweils bezüglich ihrer Höhe einer von drei verschiedenen Klassen zugeteilt werden. Unmittelbar anschliessend werden die Etiketten der Proberöhren 6 vom Balkencodeleser 14 gelesen und die Proben im Hinblick auf ihre nachfolgende Bearbeitung weiter klassifiziert, u. a. kann auf Grund des Balkencodes festgestellt werden, ob eine Probe zentrifugiert werden soll oder nicht.

Wenn der Proberöhrenbehälter 7 den Anfang der Rückführbahn 9 erreicht, kommt er in den Wirkungsbereich der Förderbänder 12 derselben, die ihn, nun entgegen der Transportrichtung der Zuführbahn 8 und wieder quer zu seiner Längsrichtung, weitertransportieren, bis er sich über der Waage 15 befindet, die daraufhin aktiviert wird. Sie wird angehoben, bis der Proberöhrenbehälter 7 auf der Waage 15 aufliegt und durch dieselbe leicht von den Förderbändern 12 abgehoben wird. Dann wird das Gesamtgewicht des Proberöhrenbehälters 7 ermittelt. Anschliessend wird mittels des Greifers 19 eine erste Proberöhre 6 erfasst, angehoben und aus dem Proberöhrenbehälter 7 entfernt. Anschliessend wird wiederum das Gewicht des Proberöhrenbehälters 7 ermittelt.

Falls das Gewicht der entfernten Proberöhre 6 benötigt wird, was insbesondere dann der Fall ist, wenn die in ihr befindliche Probe zentrifugiert werden soll, so wird es als Differenz der vor und nach ihrer Entfernung aus dem Proberöhrenbehälter 7 ermittelten Gewichte desselben bestimmt. Die Proberöhre 6 kann dann nach dem Resultat der Gewichtsbestimmung in einem von vier Proberöhrenkörben 18, die sich im Zugriffsbereich des Greifers 19 befinden, abgelegt werden. Dabei wird in bereits erläuterter Weise eine Gewichtsverteilung angestrebt, bei der die für die Zentrifuge 2 maximal zulässigen Unwuchten nicht überschritten werden. Neben dem Gewicht der entnommenen Proberöhre 6 können natürlich auch noch andere Parameter für die Zuteilung berücksichtigt werden, z. B. gegebenenfalls das Gesamtgewicht der im Proberöhrenbehälter 7 verbliebenen Proberöhren 6, das aus der letzten Wägung und dem bekannten Leergewicht desselben bestimmt werden kann oder die ermittelten Höhen der Proberöhren 6. Wenn die Probe nicht zentrifugiert werden soll, kann die Proberöhre 6 mit oder ohne Bestimmung ihres Gewichtes unmittelbar auf einem der Träger 5 der Fördereinrichtung 4 abgesetzt werden.

Bei der Entnahme der weiteren Proberöhren 6 wird genau gleich wie oben beschrieben vorgegangen. Nach jeder Entnahme wird das Gesamtgewicht des Proberöhrenbehälters 7 ermittelt und aus der Differenz zum Resultat der voraufgehenden Wägung das Gewicht der eben entnommenen Proberöhre bestimmt. Sind alle Proberöhren, die entnommen werden sollten, entnommen - gewöhnlich sind das alle, es kann aber vorkommen, dass einzelne Proberöhren nicht entnommen werden sollen, z. B. wenn der Balkencode nicht lesbar war - so wird die Waage 15 wieder in ihre inaktive Position abgesenkt und der Proberöhrenbehälter 7 weitertransportiert, wobei gewöhnlich zugleich der nächste in den Bereich der Waage 15 geschoben wird. Spätestens wenn die Rückführbahn 9 vollständig mit - normalerweise leeren - Proberöhrenbehältern 7 gefüllt ist, wird an den Ausgang derselben die Lade 51b angekoppelt, was sowohl ein Versenken eines Anschlags am Ende der Rückführbahn 9 auslöst, der bisher verhindert hat, dass Proberöhrenbehälter über deren Ende hinausgeschoben wurden als auch ein Anlaufen der Förderbänder 12 derselben, die sämtliche Proberöhrenbehälter 7 von der Rückführbahn 9 auf die Lade 51b schieben, wo sie wegen der Neigung derselben nach aussen rutschen, bis sie anstehen. Wenn sie voll ist, wird die Lade 51b abgekoppelt und entfernt. Die Zuführeinrichtung 1 kann gegebenenfalls auch so betrieben werden, dass die Proberöhrenbehälter vom Ende der Rückführbahn 9 über die zweite Zwischenbahn 10' zurück an den Anfang der Zuführbahn 8 verschoben werden und somit in einem geschlossenen Kreis umlaufen. In diesem Fall werden sie manuell mit Proberöhren bestückt.

Sind die Proberöhrenkörbe 18 aufgefüllt, so müssen sie in die Zentrifuge 2 eingeführt werden. Zu diesem Zweck fährt der Greifer 19 die Halterung 24 (Fig. 2) an, wo die Greiferzange 20 das Handhabungsteil 25 fasst, anhebt und die Aufnahmevorrichtung 23 nach vorn herauszieht. Anschliessend wird ein erster Proberöhrenkorb 18 in der Zentrifuge 2 gefasst, indem die Aufnahmevorrichtung 23 mittels des Greifers 19 so positioniert wird, dass die Haken 37 vor den Oesen in den Laschen 50 liegen, worauf die Haken 37 durch eine waagrechte Verschiebung in die Oesen eingeführt werden. Anschliessend wird der Greifer 19 angehoben, so dass die Haken 37 mit den Oesen sicher eingreifen. Der so angekoppelte Proberöhrenkorb 18 kann jetzt aus der Zentrifuge 2 herausgehoben und zu einem geeigneten Platz verschoben werden. Anschliessend wird die Verbindung zwischen der Aufnahmevorrichtung 23 und dem Proberöhrenkorb 18 durch eine zur oben beschriebenen umgekehrte Bewegungsfolge wieder gelöst. In entsprechender Weise wird dann einer der neu aufgefüllten Proberöhrenkörbe 18 zur Zentrifuge 2 verschoben und in dieselbe eingeführt. So werden schliesslich alle vier Proberöhrenkörbe 18 in der Zentrifuge 2 ausgetauscht, wobei die Drehachse 16 jeweils vor dem Austausch eines weiteren Proberöhrenkorbs 18 eine Vierteldrehung ausführt, so dass das Herausnehmen und Einführen der Proberöhrenkörbe in die Zentrifuge 2 immer an der gleichen Stelle erfolgt.

Anschliessend fährt der Greifer 19 wiederum die Halterung 24 an und legt die Aufnahmevorrichtung 23 dort ab. Der Zentrierstreifen 43 und die Abschrägungen 45 und 48 sorgen dabei dafür, dass die Aufnahmevorrichtung 23 auch bei nicht völlig präziser Ablage genau ihre definierte Lage annimmt, an der sie sicher und ohne Schwierigkeiten wieder aufgenommen werden kann.

Der Greifer 19 entnimmt nun wiederum unmittelbar mittels der Greiferzange 20 einem der aus der Zentrifuge 2 herausgenommenen Proberöhrenkörbe 18 eine Proberöhre 6 und legt sie z. B. auf einem der Träger 5 der Fördereinrichtung 4 ab. Von da wird er dann zu dem Proberöhrenbehälter 7 verschoben, der gerade auf der Waage 15 steht und entnimmt demselben eine Proberöhre 6, die er dann in der bereits weiter oben beschriebenen Weise zu einem Proberöhrenkorb 18 bringt und dort ablegt. Dieser Vorgang wird so lange wiederholt, bis alle Proberöhren 6 in den Proberöhrenkörben 18 ausgetauscht sind. Zur gleichen Zeit werden die zuletzt in die Zentrifuge 2 eingeführten Proben zentrifugiert.

Das beschriebene Verfahren und die beschriebene Arbeitsstation können in vielen Einzelheiten abgewandelt werden, ohne dass der Bereich der Erfindung verlassen würde. So kann z. B. die Uebergabeeinrichtung mehrere verschiedene Aufnahmevorrichtungen in mehreren Halterungen aufweisen, die zum Ankoppeln an Gegenstände verschiedener Kategorien geeignet sind. Die Arbeitsstation kann verschiedene Module zum Verteilen, Pipettieren und zur Durchführung anderer Verarbeitungsschritte aufweisen, die alle durch die Fördereinrichtung und die Uebergabeeinrichtung - es können auch mehrere sein - miteinander verbunden sind.

### Bezugszeichenliste

- 1: Zuführeinrichtung
- 2: Zentrifuge
- 3: Uebergabeeinrichtung
- 4: Fördereinrichtung
- 5: Träger
- 6: Proberöhre
- 7: Proberöhrenbehälter
- 8: Zuführbahn
- 9: Rückführbahn
- 10, 10': Zwischenbahnen
- 11: Grundplatte
- 12: Förderbänder
- 13: Höhenabtaster
- 14: Balkencodeleser
- 15: Waage
- 16: Drehachse
- 17: Arme
- 18: Proberöhrenkorb
- 19: Greifer
- 20: Greiferzange
- 21a,b: Greiferfinger
- 22: Kontaktflächen
- 23: Aufnahmevorrichtung
- 24: Halterung
- 25: Handhabungsteil
- 26: Grundkörper
- 27: erster Kragen
- 28: zweiter Kragen
- 29a,b: Ausnehmungen
- 30: dritter Kragen
- 31a,b: Fortsätze
- 32: Anschlagfläche
- 33: Zwischenteil
- 34: Stiel
- 35: Trägerplatte
- 36a,b: U-Teile
- 37: Haken
- 38: Bodenplatte
- 39: Rückwand
- 40: Halteplatte
- 41: Schlitz
- 42: Auflagestreifen
- 43: Zentrierstreifen
- 44: Schlitz
- 45: Abschrägungen
- 46a,b: Frontplatten
- 47: Schlitz
- 48: Abschrägungen
- 49a,b: Kontaktbereiche
- 50: Laschen
- 51a,b: Laden

## Patentansprüche

1. Aufnahmevorrichtung (23) zum Aufnehmen, Verschieben und Absetzen eines Gegenstandes mittels eines Greifers (19), mit einem durch den Greifer (19) fass- und haltbaren Handhabungsteil (25) und einem mit demselben verbundenen Zwischenteil (33) zum Ankoppeln eines Gegenstandes.

2. Aufnahmevorrichtung (23) nach Anspruch 1, **dadurch gekennzeichnet, dass** das Handhabungsteil (25) im wesentlichen zylindrisch ausgebildet ist und das Zwischenteil (33) an einem unteren Ende desselben anschliesst.

3. Aufnahmevorrichtung nach Anspruch 1 oder 2, **dadurch gekennzeichnet, dass** das Zwischenteil (33) an einem unteren Ende mindestens einen Haken (37) zum Eingriff mit einem aufzunehmenden Gegenstand, insbesondere einem Proberöhrenkorb (18) aufweist.

4. Aufnahmeeinrichtung, **dadurch gekennzeichnet, dass** sie eine Aufnahmevorrichtung nach einem der Ansprüche 1 bis 3 umfasst sowie eine Halterung (24), in welcher die Aufnahmevorrichtung (23) durch den Greifer (19) in definierter Lage absetzbar und aufnehmbar ist.

5. Aufnahmeeinrichtung nach Anspruch 4, **dadurch gekennzeichnet, dass** das Handhabungsteil (25) eine nach unten weisende Anschlagfläche (32) aufweist und die Halterung (24) eine waagrechte Halteplatte (40), auf welcher die Anschlagfläche (32) aufliegt, mit einem seitlichen Schlitz (41) zum Einführen der Aufnahmevorrichtung (23).

6. Aufnahmeeinrichtung nach Anspruch 5, **dadurch gekennzeichnet,** die Anschlagfläche (32) auf einem tiefergelegten Auflagestreifen (42) aufliegt, der den Rand des Schlitzes (41) an der Oberseite der Halteplatte (40) teilweise umgibt und welcher aussen von einem trichterartig nach innen geneigten Zentrierstreifen (43) begrenzt ist, der den Rand der Anschlagfläche (32) knapp umgibt.

7. Aufnahmeeinrichtung nach einem der Ansprüche 4 bis 6, **dadurch gekennzeichnet, dass** das Handhabungsteil (25) einen seitlichen Fortsatz (31a, 31b) aufweist und die Halterung (24) einen Schlitz (44, 47), welcher zur Drehsicherung den Fortsatz (31a, 31b) mit geringem seitlichen Spiel aufnimmt.

8. Uebergabeeinrichtung mit einem Greifer (19), der eine Greiferzange (20) mit mindestens zwei zum Oeffnen und Schliessen gegeneinander beweglichen Greiferfingern (21a, 21b) aufweist, **dadurch gekennzeichnet, dass** sie eine Aufnahmevorrichtung nach Anspruch 2 oder 3 umfasst und das Handhabungsteil (25) an seinem oberen Ende zwei einander gegenüberliegende Ausnehmungen (29a, 29b) zur Aufnahme der Greiferfinger (21a, 21b) aufweist.

9. Uebergabeeinrichtung nach Anspruch 8, **dadurch gekennzeichnet, dass** die Greiferfinger (21a, 21b) an den Endbereichen gegeneinander weisende Kontaktflächen (22) aufweisen, die beim Halten des Handhabungsteils (25) mit entsprechenden Gegenkontaktflächen an demselben zusammenwirken.

10. Uebergabeeinrichtung nach Anspruch 9, **dadurch gekennzeichnet, dass** die Kontaktflächen (21) mit einem rutschfesten Belag versehen sind.

11. Uebergabeeinrichtung nach Anspruch 9 oder 10, **dadurch gekennzeichnet, dass** die Greiferfinger (21a, 21b) beim Halten des Handhabungsteils (25) mit Kontaktbereichen (49a, 49b), welche mit Abstand oberhalb der Kontaktflächen (22) liegen, am Handhabungsteil (25) anliegen, wobei sie unterhalb der besagten Kontaktbereiche (49a, 49b) elastisch leicht nach aussen gebogen sind.

12. Arbeitsstation mit einer Zentrifuge (2) und mehreren Proberöhrenkörben (18), **dadurch gekennzeichnet, dass** sie eine Uebergabeeinrichtung (3) nach einem der Ansprüche 8 bis 11 aufweist zur Entnahme von Proberöhren (6) aus einem Proberöhrenbehälter (7) und Verteilung derselben auf die Proberöhrenkörbe (18) sowie zum Einführen derselben in die Zentrifuge (2) unter Zuhilfenahme der Aufnahmevorrichtung (23).

13. Arbeitsstation nach Anspruch 12, **dadurch gekennzeichnet, dass** die Proberöhrenkörbe (18) jeweils mindestens eine Oese, insbesondere mehrere waagrecht voneinander beabstandete Oesen aufweisen und das Zwischenteil (33) mit entsprechend angeordneten Haken (37) zum Eingriff in die mindestens eine Oese versehen ist.

14. Verfahren zum Betrieb einer Arbeitsstation nach Anspruch 12 oder 13, **dadurch gekennzeichnet, dass** mehrere Proberöhren (6) nacheinander von der Greiferzange (20) in Proberöhrenbehältern (7) gefasst und auf mehrere Proberöhrenkörbe (18) verteilt werden und anschliessend die Aufnahmevorrichtung (23) von der Greiferzange (20) gefasst und mittels derselben die Proberöhrenkörbe (18) in die Zentrifuge (2) eingeführt und die Proben zentrifugiert werden, worauf die Proberöhrenkörbe (18) wieder mittels der Aufnahmevorrichtung (23) der Zentrifuge (2) entnommen werden, die Aufnahmevorrichtung (23) abgelegt wird und die Proberöhren (7) von der Greiferzange (20) in den Proberöhrenkörben (7) gefasst, denselben entnommen und in Proberöhrenbehältern (7) abgesetzt werden.
